# EUROPEAN PATENT APPLICATION

(11) **EP 2 639 008 A1**
(43) Date of publication of application: **18.09.2013**
(21) Application number: 13153846.4
(22) Date of filing: 04.02.2013
(51) Int. Cl.: B23P 19/04, B27M 3/00

(54) **A device and a method for repairing a pallet**

(30) Priority: 16.03.2012 SE 1250252
(71) Applicant: Jointec AB, 296 35 Ahus (SE); Prepac AB, 286 22 Örkelljunga (SE)
(72) Inventor: Berg, Karl-Johan, 296 35 ÅHUS (SE)
(74) Representative: Persson, Albin

(57) **Abstract**

A device (10) and a method for replacing a deficient component (14) of a pallet (11), such as a deficient stringer board or a deficient block, with a replacement component (16), such as a replacement stringer board or a replacement block. The device (10) comprises an arm (17) having a gripping device (18) for gripping a replacement component (16), wherein the arm (17) is arranged to be inserted between top and bottom boards (12, 13) of the pallet (11) while bringing the replacement component (16) along therewith, and wherein the arm (17) is provided with at least one spacing element (23) being movable between a first position and a second position for forcing the bottom boards and the opposite top boards (12,13) of the pallet (11) apart, and to push out the deficient component (14) while simultaneously replacing it by the replacement component (16).

## Description

### FIELD OF THE INVENTION

The invention relates to a device and a method for repairing a pallet. More specifically, the present invention relates to a method and a device for replacing a component of a pallet, such as a stringer board or block of the pallet. Hence, the present invention relates to a device and a method for replacing a deficient component of a pallet with a replacement component. For example, the present invention relates to a device and method for replacing a deficient pallet stringer board or a deficient pallet block with a replacement stringer board or a replacement block.

Pallets of this type are used for transporting goods and there is a plurality of different types of pallets. Such pallets comprise, for example, top boards forming a deck for supporting the goods, bottom boards for engaging a ground surface, stringer boards running perpendicular to the top and bottom boards, and blocks connecting the top and bottom boards. Pallets can be damaged due to careless handling, accidents, moist environment, etc., wherein the pallets has to be repaired or discarded. Repair includes replacement of a deficient component, such as a board or block, of the pallet.

This type of devices and methods are used for repairing available pallets, for example by replacing one or more deficient boards or deficient blocks with replacement boards or replacement blocks.

### PRIOR ART

There are several different types of devices and methods for repairing pallets in the prior art. According to one conventional method fasteners, such as nails or similar, holding a deficient pallet board or pallet block to be replaced, are first cut. For example, the fasteners are cut by means of a saw, such as a reciprocating saw, handled manually. Alternatively, the fasteners are cut automatically by means of a knife, such as a knife arranged on a robot or a mechanical arm cutting the fasteners between boards and stringer boards or between boards and blocks of the pallet. Then, unfastened boards and blocks are removed, after which new boards and blocks are arranged at the positions of the removed deficient boards and blocks. For example, new boards and blocks are arranged by means of a robot applying and fastening new boards and blocks by nails in suitable positions.

Despite available robot systems for repairing pallets there is a need for improved repairing of pallets, such as pallets having a damaged component in the form of a damaged stringer board or a damaged block.

### SUMMARY OF THE INVENTION

An object of the invention is to provide a device and a method for efficient and reliable repair of a pallet having a deficient component, such as a deficient stringer board or a deficient block. The device and method according to the invention result in automatic, reliable and cost efficient replacement of a deficient stringer board or block of a pallet.

The present invention relates to a device for replacing a deficient component of a pallet with a replacement component, comprising an arm having a gripping device for gripping a replacement component, wherein the arm is arranged to be inserted between top and bottom boards of the pallet while bringing the replacement component along therewith, and wherein the arm is provided with at least one spacing element being displaceable between a first position and a second position for forcing the bottom boards and the opposite top boards of the pallet apart, and to push out the deficient component while simultaneously replacing it by the replacement component. The replacement component can be a replacement stringer board or a replacement block, wherein the deficient component can be a deficient stringer board or a deficient block. The design of the device results in that a replacement component can be gripped and, by that the arm and the pallet are displaceable in relation to each other, brought to a position adjacent a deficient component to be replaced, after which the replacement component, by further relative displacement of the arm and pallet, pushes out the deficient component while simultaneously replacing it with the replacement component. Hence, the deficient component can be removed and replaced by a new in a single step and in the same device. Further, the spacing element results in a reliable and efficient insertion of the replacement component as the replacement component is prevented from getting stuck on other components of the pallet.

The gripping device can comprise a jaw and an anvil cooperating therewith, wherein the jaw and the anvil are arranged for engaging opposite sides of a block or short sides of a replacement stringer board for clamping thereof. By the gripping device gripping the short sides of the replacement board or the sides of the block a simple gripping function is provided while the height or thickness of the arm can be low to facilitate insertion in the space between the top and bottom boards of the pallet. Further, this results in an efficient collecting in a storage for replacement stringer boards, for example comprising a pile of replacement stringer boards.

The present invention also relates to a method for replacing a deficient component of a pallet with a replacement component, comprising the steps of
cutting or removing fasteners holding the deficient component before replacement thereof with the replacement component,
gripping a replacement component by means of a gripping device of a movable arm,
inserting the arm with the replacement component between top and bottom boards of the pallet,
bringing a spacing element arranged on the arm from a second position, in which the spacing element can be inserted between the top and bottom boards of the pallet, to a first position, in which the spacing element forces the bottom boards and the opposite top boards apart at the deficient component, and
pushing out the deficient component while simultaneously replacing it with the replacement component.

Further characteristics and advantages of the present invention will become apparent from the description of the embodiments below, the appended drawings and the dependent claims.

### SHORT DESCRIPTION OF THE DRAWINGS

The invention will now be described more in detail with the aid of embodiments and with reference to the appended drawings, in which
Fig. 1 is a schematic perspective view of a device for replacing a stringer board of a pallet according to one embodiment, in which a pallet is arranged on a transport device for transporting the pallet, and a number of replacement stringer boards are arranged in a storage for replacement stringer boards,
Fig. 2 is a schematic view according to Fig. 1, in which a movable arm of the device retrieves a replacement stringer board from the storage and in which a spacing element of the arm is arranged in its first position,
Fig. 3 is a schematic view according to Fig. 1, in which the arm has retrieved a replacement stringer board from the storage,
Fig. 4 is a schematic view according to Fig. 1, in which the spacing element of the arm is arranged in its second position,
Fig. 5 is a schematic view according to Fig. 1, in which the arm with the replacement stringer board has been arranged between bottom and top boards of the pallet,
Fig. 6 is a schematic view according to Fig. 5, in which the deficient stringer board is pushed out from its position in the pallet by means of the replacement stringer board, and,
Fig. 7 is a schematic view according to Fig. 6, in which the deficient stringer board has been replaced by the replacement stringer board.

### THE INVENTION

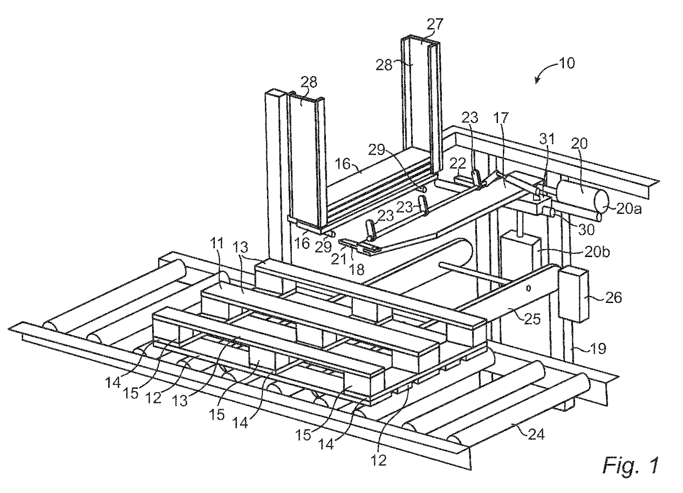

Referring to Fig. 1 a device 10 for repairing a pallet 11 is illustrated schematically. In the drawings the device 10 is simplified and parts of the device 10 have been modified or removed to increase the intelligibility of the invention.

In the illustrated embodiment the pallet 11 comprises top boards 12, bottom boards 13, stringer boards 14 and blocks 15. The top boards 12 form the top deck of the pallet 11 and a surface for supporting goods to be transported on the pallet 11. The bottom boards 13 form the bottom side of the pallet 11 and are arranged for engaging a ground surface. Hence, the pallet 11 illustrated in the drawings is arranged with the top boards 12 downwards, so that the pallet 11 is placed upside down. The top boards 12 are arranged in parallel with the bottom boards 13 and are connected to them through the blocks 15 and the stringer boards 14. The stringer boards 14 extend substantially perpendicular to the top boards 12 and the bottom boards 13. For example, the stringer boards 14 are arranged between the top boards 12 and the blocks 15. The pallet 11 further comprises fasteners for holding together the different components of the pallet 11, which fasteners can be arranged in a conventional manner, such as in the form of nails, and are not illustrated in the drawings. For example, the pallet 11 is a conventional europallet or similar. Alternatively, the pallet 11 is arranged in a different way. For example, the pallet 11 is made from wood.

The device 10 is arranged for repairing a pallet 11 having a deficient component, such as a stringer 14 damaged by mechanical damage, moist, decay or in any other way. In the illustrated embodiment example, the device 10 is arranged for replacing a deficient stringer board 14 of a pallet 11 with a replacement stringer board 16. Alternatively, the device 10 is arranged for replacing a deficient block of a pallet 11 with a block in a corresponding manner.

The device 10 comprises an arm 17, such as a movable arm 17, having a gripping device 18 for gripping a board, such as a replacement stringer board 16. For example, the arm 17 is arranged in a stand 19 or similar for supporting the arm 17. The arm 17 is connected to a motor 20, such as a conventional motor, for operating the arm 17. The arm 17 is movable in at least a first direction in a reciprocating movement, for example by means of a first motor 20a. For example, the first direction is a horizontal direction. In the illustrated embodiment the arm is movable also in a second direction in a reciprocating movement, for example by means of a second motor 20b, which second direction is a vertical direction. Alternatively, the arm 17 is movable in any direction in one or more planes and/or is pivotable between a first and a second position. The arm 17 is elongated and arranged with a length substantially corresponding to the length of a stringer board 14 and a replacement stringer board 16.

In the illustrated embodiment the gripping device 18 comprises a jaw 21 and an anvil 22 interacting therewith for gripping the replacement stringer board 16. The jaw 21 is movable between a first position and a second position to be able to grip and release the replacement stringer board 16. For example, the jaw 21 is pivotably arranged on the arm 17, such as in one end of the arm 17. Alternatively, the jaw 21 is displaceable linearly between the first and second position to be able to grip the replacement stringer board 16.

The arm 17 is provided with a spacing element 23 being movable between a first position and a second position. In the illustrated embodiment the arm 17 is provided with a plurality of spacing elements 23, such as one spacing element 23 for each of the lower boards 13 of the pallet 11. For example, the arm 17 is provided with three spacing elements 23. For example, the spacing elements 23 are pivotable between the first and second position, such as around an axis extending along the arm 17. The spacing elements 23 are elongated and pivotable between its first position, in which the spacing elements 23 project in an angle to an imaginary plane extending through the arm 17, and its second position, in which the spacing elements 23 extend substantially in parallel to the imaginary plane through the arm 17. Alternatively, the spacing element 23 is displaceable linearly between the first and second position.

In the illustrated embodiment the device 10 further comprises a transport device 24 for feeding pallets 11 to the arm 17. For example, the transport device 24 comprises a conventional conveyor belt, conveyor rollers or similar. The transport device 24 is arranged for transporting the pallet 11 in a first direction, such as in a direction perpendicular to the longitudinal direction of the arm 17 and perpendicular to the stringer boards 14. In the illustrated embodiment the device 10 also comprises a transport apparatus 25, for example in the form of one or more conveyor belts operated by a motor 26, for transporting the pallet 11 in a second direction, such as in a direction along the longitudinal direction of the arm 17 and along the longitudinal direction of the stringer boards 14. The arm 17 and the transport device 24 and/or the transport apparatus 25 interact so that the arm 17 and the pallet 11 are movable in relation to each other for replacement of the deficient stringer board 14 with the replacement stringer board 16.

In the illustrated embodiment the device 10 comprises a storage 27 for replacement boards, such as replacement stringer boards 16, which accomodates a plurality of replacement stringer boards 16. The storage 27 is arranged so that the arm 17 with the gripping device 18 can retrieve replacement stringer boards 16. Alternatively, the storage 27 is movable for bringing replacement stringer boards to the arm 17. For example, the storage is arranged with sides 28 and a bottom in the form of bottom bars 29 forming a gap between the sides 28 and the bottom bars 29, so that the short sides of the replacement stringer boards 16 are available to be gripped by the gripping device 18. The storage 27 is, for example, arranged vertically to accomodate a vertical stack of replacement stringer boards 16, wherein a lowermost replacement stringer board 16 in the storage 27 is available to be gripped by the gripping device 18.

For example, the arm 17 is suspended in a slide 31 running in a groove 30 or similar to provide the required movement of the arm 17 in the first direction, such as linearly, horizontally and perpendicular to the longitudinal direction of the arm 17, by means of the first motor 20a. For example, the arm 17 is displaceable in the second direction, such as linearly in the vertical direction, by means of the second motor 20b. Alternatively, the arm 17 is movable in any other conventional manner. For example, the arm 17 is pivotable around one or more axes. Alternatively, the arm 17 is fixed.

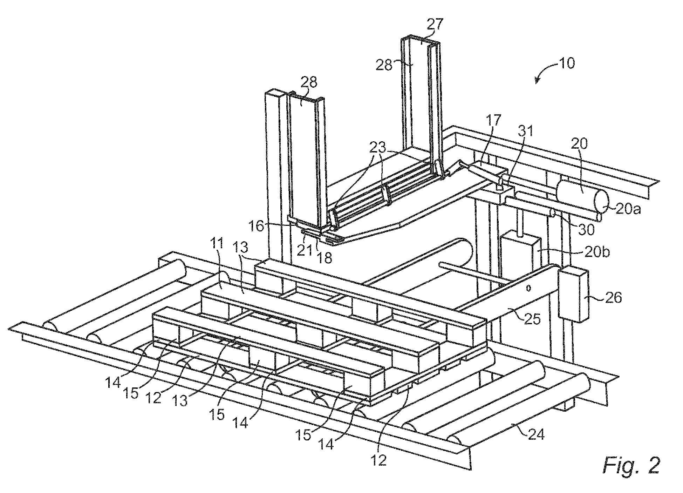

Figs. 1-7 schematically illustrate replacement of a stringer board 14 by means of the device 10, wherein the arm 17 in Fig. 1 is illustrated in a position for retrieving a replacement stringer board 16 in the storage 27 while a pallet 11 simultaneously is arranged on the transport device 24. With reference to Fig. 2 the gripping device 18 has gripped a replacement stringer board 16 in the storage 27. Hence, the arm 17 is displaceable in the first direction perpendicular to the longitudinal direction of the arm 17, wherein the arm 17 can be brought to a position in which it extends along the replacement stringer board 16. Alternatively, the replacement stringer board 16 is brought to the arm 17. The gripping device 18 is arranged for gripping the lowermost replacement stringer board 16 in the storage 27 and for engaging the short sides of the replacement stringer board 16. The lowermost replacement stringer board 16 in the storage 27 is supported by the bottom bars 29 while the distance between the bottom bars 29 and the sides 28 expose the short sides of the replacement stringer board 16. Hence, the jaw 21 and the anvil 22 are arranged for engaging opposite short sides of the replacement stringer board 16 for clamping thereof. For example, the jaw 21 is pivotable around an axis extending perpendicular to the longitudinal direction of the arm 17 and perpendicular to an imaginary plane through the arm 17 coinciding with a plane of the replacement stringer board 16. For example, the jaw 21 is pivotable around a vertical axis. In the position illustrated in Fig. 2 the spacing element 23 is arranged in an angle to the imaginary plane through the arm 17 and the plane of the replacement stringer board 16, so that the spacing element 23, for example, projects upwards and alternatively downwards from the arm 17.

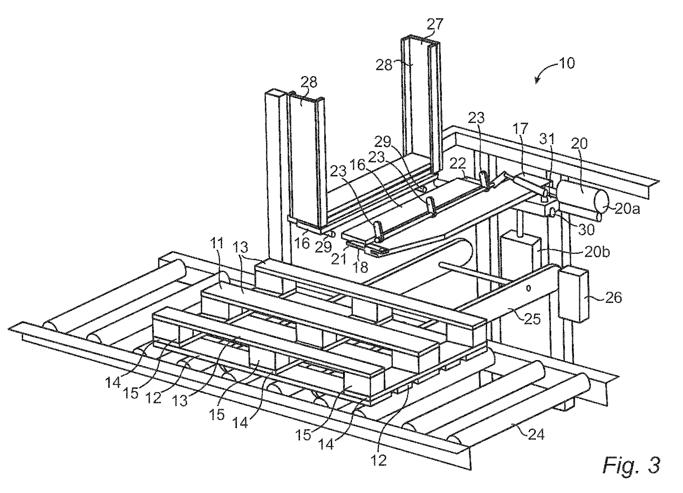

With reference to Fig. 3 the arm 17 is illustrated with a replacement stringer board 16 in the gripping device 18, and wherein the replacement stringer board 16 arranged in the gripping device 18 has been removed from the storage 27, so that the next replacement stringer board 16 in the storage 27 takes the place of the removed replacement stringer board 16 and abuts against the bottom bars 29 and has exposed short sides. Hence, the arm 17 has been displaced in the first direction, such as horizontally backwards along the groove 30 in relation to the storage 27 by means of the first motor 20a. Hence, the arm 17 is arranged for gripping a replacement stringer board 16, so that the plane of the replacement stringer board 16 substantially coincides with the imaginary plane though the arm 17. In the illustrated embodiment the arm 17 has been displaced to a position on a level with the pallet 11, so that the arm 17 with the replacement stringer board 16 can be pushed in between the top and bottom boards 12, 13 of the pallet 11.

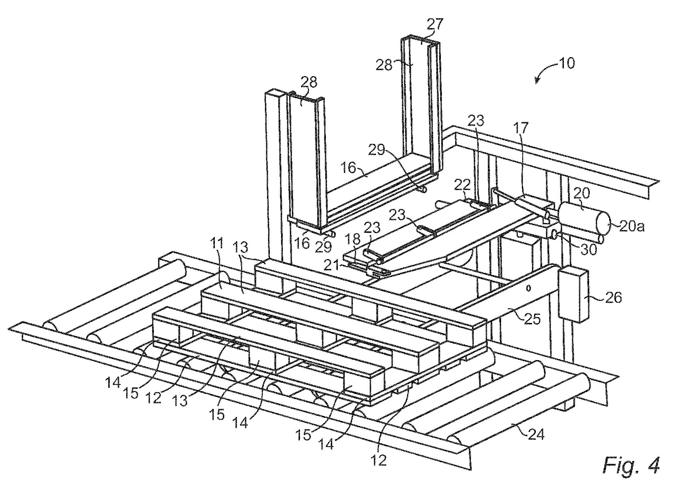

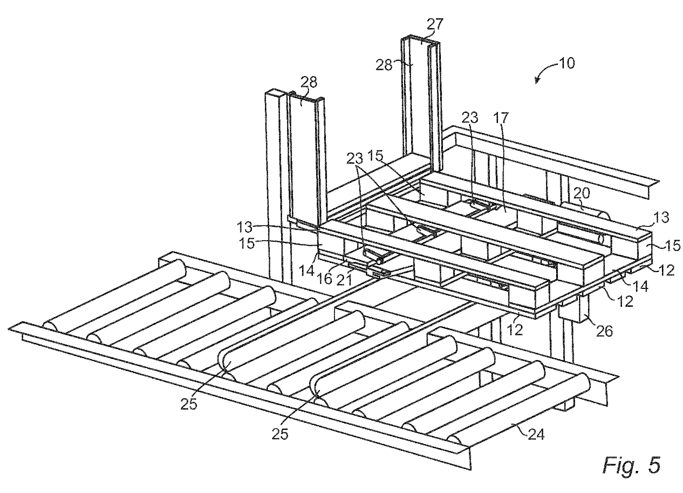

With reference to Fig. 4 the arm 17 is illustrated in the same position as in Fig. 3. In Fig. 4 the spacing element 23 has been displaced from its first position to its second position, in which the spacing element 23 extends substantially in parallel to the jaw 21 and a plane of the replacement stringer board 16 for the arm 17 to fit between the top and bottom boards 12, 13 of the pallet 11, so that the arm 17 can be inserted between them, as illustrated in Fig. 5.

With reference to Fig. 5 the arm 17 is illustrated inserted between the top and bottom boards 12, 13 of the pallet 11. In the illustrated embodiment the pallet 11 has been positioned by means of the transport device 25 so that the arm 17 is inserted between the top and bottom boards 12, 13 of the pallet 11. Alternatively, the arm 17 is movably arranged in a direction along the longitudinal direction of the arm 17 to be inserted between the top and bottom boards 12, 13 of the pallet 11. In the embodiment of Fig. 5 the arm 17 with the replacement stringer board 16 has been positioned at a stringer board 14 at a short side of the pallet 11. The device 10 is, for example, arranged for replacing any stringer board 14 of the pallet 11, for example through positioning the arm 17 and the pallet 11 in suitable positions in relation to each other. Hence, the arm 17 is arranged for gripping a replacement stringer board 16 by means of the gripping device 18 and be inserted between the top and bottom boards 12, 13 of the pallet 11, so that the arm 17 and the replacement stringer board 16 are arranged in parallel with and in the same plane as the deficient stringer board 14 to be replaced.

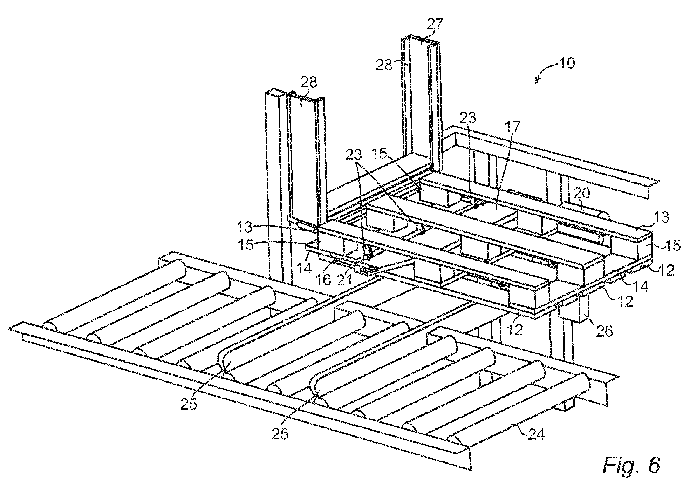

With reference to Fig. 6 the arm 17 is illustrated with the replacement stringer board 16 in a position for replacement of the deficient stringer board 14 of the pallet 11. The spacing element 23 is brought to its first position, in which the spacing element 23 projects in an angle from the plane of the replacement stringer board 16 and forces the top and bottom boards 12, 13 of the pallet 11 apart to create sufficient space for the replacement stringer board 16 to be pushed into the position of the deficient stringer board 14 while it simultaneously is pushed out by means of the replacement stringer board 16. For example, a free end of the spacing element 23 is brought to engage a bottom board 13 of the pallet 11 by rotating the spacing element 23 around an axis extending along the arm 17, wherein further rotation of the spacing element 23 forces the top and bottom boards 12, 13 of the pallet 11 apart, bringing the blocks 15 of the pallet 11 along therewith, so that the distance between the top boards 12 and the relevant blocks increases to facilitate insertion of the replacement stringer board 16 to the position of the deficient stringer board 14. Alternatively, the spacing element 23 is arranged with a telescopic function or in any other way to increase a distance between the top and bottom boards 12, 13 of the pallet 11 and thereby the space for the replacement stringer board 16, so that the blocks 15 of the pallet 11 not obstruct insertion of the replacement stringer board 16 to the position of the deficient stringer board 14. A long side of the replacement stringer board 16 is brought into engagement with a long side of the deficient stringer board 14, after which the arm 17 and the pallet 11 are displaced in relation to each other in a direction perpendicular to the longitudinal direction of the arm 17, so that the replacement stringer board 16 pushes out the deficient stringer board 14 while the replacement stringer board 16 simultaneously replaces the deficient stringer board 14.

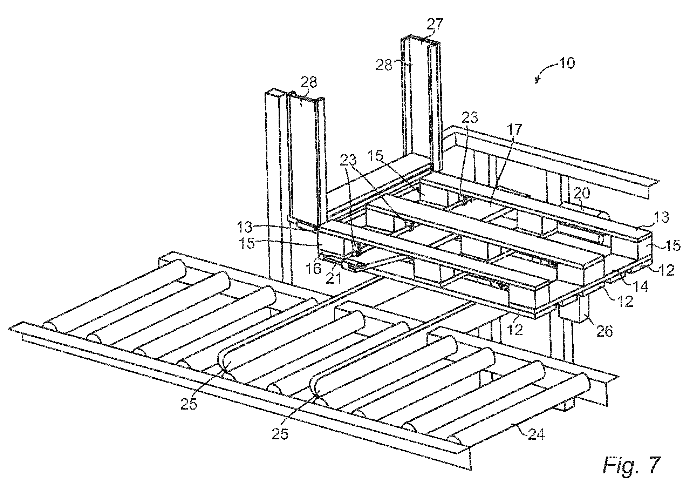

With reference to Fig. 7, the arm 17 is illustrated in a position in which the replacement stringer board 16 has replaced the deficient stringer board 14, wherein the deficient stringer board 14 has been removed. For example, the removed stringer board 14 falls down and is taken care of in a suitable manner. After replacement of the deficient stringer board 14 with the replacement stringer board 16, the replacement stringer board 16 is released from the gripping device 18, wherein the arm 17 or the pallet 11 is removed. For example, the replacement stringer board 16 is fastened by means of fasteners, such as nails, in a conventional manner.

## Claims

1. A device (10) for replacing a deficient component (14) of a pallet (11) with a replacement component (16), comprising an arm (17) having a gripping device (18) for gripping a replacement component (16), wherein the arm (17) is arranged to be inserted between top and bottom boards (12, 13) of the pallet (11) while bringing the replacement component (16) along therewith, and wherein the arm (17) is provided with at least one spacing element (23) being displaceable between a first position and a second position for forcing the bottom boards and the opposite top boards (12,13) of the pallet (11) apart, so that the deficient component (14) can be pushed out while simultaneously being replaced by the replacement component (16).

2. A device (10) according to claim 1, wherein the deficient component (14) is a deficient stringer board of the pallet (11), wherein the replacement component (16) is a replacement stringer board, and wherein the spacing elements (23) are arranged for forcing apart the bottom boards and opposite top boards (12, 13) of the pallet (11) at the deficient stringer board (14) while bringing along therewith pallet blocks (15) connected to the boards (13).

3. A device (10) according to claim 1, wherein the deficient component (14) is a deficient block of the pallet (11), wherein the replacement component (16) is a replacement block, and wherein the spacing elements (23) are arranged for forcing apart the bottom boards and opposite top boards (12,13) of the pallet (11) at the deficient block while bringing along therewith a pallet stringer board connected to the boards (13).

4. A device according to claim 2, wherein the gripping device comprises a jaw (21) and an anvil (22), wherein the jaw (21) and the anvil (22) are arranged for engaging opposite short sides of the replacement stringer board (16) for clamping thereof.

5. A device according to any of the preceding claims, wherein the arm (17) is provided with a spacing element (23) for each of the bottom boards (13) of a pallet (11).

6. A device according to any of the preceding claims, wherein the spacing element (23) is elongated and pivotable between the first position, in which the spacing element projects in an angle from an imaginary plane through the arm (17), and the second position, in which the spacing element extends substantially in parallel to the imaginary plane through the arm (17).

7. A device according to any of the preceding claims, wherein the arm (17) is motor driven and movable at least in a direction perpendicular to a longitudinal direction of the arm (17).

8. A device according to any of the preceding claims, wherein the device (10) further comprises a transport device (24) for feeding the pallet (11) with the deficient component (14), and a storage (27) for replacement components (16).

9. A method for replacing a deficient component (14) of a pallet (11) with a replacement component (16), comprising the steps of
cutting or removing fasteners holding the deficient component (14) before replacement thereof with the replacement component (16),
gripping a replacement component (16) by means of a gripping device (18) of a movable arm (17),
inserting the arm (17) with the replacement component (16) between top and bottom boards (12,13) of the pallet (11),
bringing a spacing element (23) arranged on the arm (17) from a second position, in which the spacing element (23) can be inserted between the top and bottom boards (12, 13) of the pallet (11), to a first position, in which the spacing element (23) forces the bottom boards and the opposite top boards (12, 13) apart at the deficient component (14), and
pushing out the deficient component (14) while simultaneously replacing it with the replacement component (16).

10. A method according to claim 9, comprising the steps of
bringing one side of the replacement component (16) into engagement with a side of the deficient component (14), and
displacing the arm (17) carrying the replacement component (16) in relation to the pallet (11) and thereby forcing the replacement component (16) to push out the deficient component (14) while simultaneously replacing it with the replacement component (16).

11. A method according to claim 9 or 10, wherein the deficient component is a deficient stringer board of the pallet (11), wherein the replacement component is a replacement stringer board, and wherein the spacing element (23) forces apart the bottom boards and the opposite top boards (12,13) at the deficient stringer board (14) while bringing along therewith pallet blocks (15) connected to the boards (13).

12. A method according to claim 9 or 10, wherein the deficient component is a deficient block of the pallet (11), wherein the replacement component is a replacement block, and wherein the spacing element (23) forces apart the bottom boards and the opposite top boards (12, 13) at the deficient block (14) while bringing along therewith a pallet stringer board connected to the boards (13).

13. A method according to claim 11, comprising the steps of
bringing a jaw (21) of the gripping device (18) and an anvil (22) interacting with the jaw (21) to engage opposite short sides of a replacement stringer board (16), and thereby gripping the replacement stringer board (16).

14. A method according to claim 11, comprising the steps of
bringing a long side of the replacement stringer board (16) to engage a long side of the deficient stringer board (14), and
displacing the arm (17) carrying the replacement stringer board (16) in relation to the pallet (11) and thereby forcing the replacement stringer board (16) to push out the deficient stringer board (14) while simultaneously replacing it with the replacement stringer board (16).

15. A method according to claim 12, comprising the steps of
bringing a side of the replacement block (16) to engage a side of the deficient block (14), and
displacing the arm (17) carrying the replacement block (16) in relation to the pallet (11) and thereby forcing the replacement block (16) to push out the deficient block (14) while simultaneously replacing it with the replacement block (16).
